# EUROPEAN PATENT APPLICATION

(11) **EP 4 715 559 A1**
(43) Date of publication of application: **25.03.2026**
(21) Application number: 24835038.1
(22) Date of filing: 23.01.2024
(51) Int. Cl.: G06F 3/06

(54) **DATA STORAGE METHOD AND RELATED APPARATUS**

(30) Priority: 06.07.2023 CN 202310828906
(71) Applicant: Huawei Technologies Co., Ltd., Shenzhen, Guangdong 518129 (CN)
(72) Inventor: LI, Daquan, Shenzhen, Guangdong 518129 (CN)
(74) Representative: MERH-IP Matias Erny Reichl Hoffmann Patentanwälte PartG mbB
(86) International application number: PCT/CN2024/073594
(87) International publication number: WO 2025/007550

(57) **Abstract**

This application discloses a data storage method and a related apparatus, and may be applied to the field of storage technologies. The method includes: when a load of a storage system is low, storing, in a manner of a small parity group, data received by the storage system, where the small parity group includes a data block and a parity block; and when a load of the storage system is high, storing, in a manner of a large parity group, data received by the storage system, where the large parity group includes a data block and a parity block, and a quantity of data blocks in the large parity group is greater than a quantity of data blocks in the small parity group. This avoids extra overheads caused by performing zero padding when the data is insufficient to fully fill a stripe, reduces write amplification, and improves performance and a service life of a disk.

## Description

This application claims priority to Chinese Patent Application No. CN202310828906.1, filed with the China National Intellectual Property Administration on July 6, 2023 and entitled "DATA STORAGE METHOD AND RELATED APPARATUS", which is incorporated herein by reference in its entirety.

### TECHNICAL FIELD

This application relates to the field of storage technologies, and in particular, to a data storage method and a related apparatus.

### BACKGROUND

In storage media of some storage systems, for example, a solid-state drive (SSD), new data is usually written by using a redirection on write (redirection on write, ROW) mechanism. To be specific, when the storage system receives new data, the new data is written into a free block of the storage system, and original data is marked as garbage data awaiting collection.

In a process in which the storage system receives data, if the data is insufficient to fully fill a complete stripe, zero padding needs to be performed on an unwritten part in the stripe, to generate parity data. However, the foregoing operations increase write amplification, and cause extra space overheads.

### SUMMARY

This application provides a data storage method and a related apparatus, to reduce write amplification.

According to a first aspect, this application provides a data storage method. The method may be applied to the field of storage technologies, and mainly includes:
storing, in a manner of a small parity group, data received by the storage system, when a load of a storage system is low, where the small parity group includes a data block and a parity block; and storing, in a manner of a large parity group, data received by the storage system, when a load of the storage system is high, where the large parity group includes a data block and a parity block, and a quantity of data blocks in the large parity group is greater than a quantity of data blocks in the small parity group.

In this application, the parity group is dynamically adjusted based on a level of the load of the storage system. When the load of the storage system is low, the small parity group is used to store the data, avoiding extra overheads caused by performing zero padding when the data is insufficient to fully fill a stripe, reducing write amplification, and improving overall performance and a service life of the storage system. When the load of the storage system is high, the large parity group is used to store the data, to improve disk utilization. A data storage manner is dynamically adjusted based on the level of the load of the storage system, to further improve performance of the storage system and reduce system overheads.

In a possible implementation of the first aspect, the storage system stores the data in a redirection on write ROW manner.

When receiving the data, the storage system stores the data in the redirection on write manner. When the load of the storage system is low, if the data is insufficient to fully fill a full stripe of a disk, a zero padding manner is generally used to fill the full stripe to generate parity data. This increases write amplification and causes extra overheads. In this implementation, the storage system dynamically adjusts a quantity of stored data blocks based on the received data, to avoid invalid zero padding and reduce write amplification.

In a possible implementation of the first aspect, that the data received by the storage system is stored includes:
The storage system sends data in the small parity group and data in the large parity group to a local storage or a remote storage for storage, where different storages store different blocks.

In this implementation, the storage system stores the data by using a storage, and blocks in the data blocks and the parity blocks all correspond to different storages, to store the data in the different storages.

In a possible implementation of the first aspect,
when garbage collection is performed on the storage, the storage system migrates, based on the large parity group, valid data stored in the storage by using the small parity group.

In this implementation, when garbage collection is performed on the storage, the storage system migrates, by using the large parity group, the valid data stored in the storage by using the small parity group, to recover capacity utilization of the storage.

In a possible implementation of the first aspect, a quantity of parity blocks in the large parity group is the same as a quantity of parity blocks in the small parity group.

In this implementation, regardless of whether the load of the storage system is high or low, it is assumed that quantities of generated parity blocks are the same, so that the quantity of data blocks is dynamically adjusted based on the received data, and different quantities of data blocks are selected for data storage. This avoids extra overheads caused by performing zero padding when the data is insufficient to fully fill a stripe, and reduces write amplification.

In a possible implementation of the first aspect, the storage system is a centralized storage device or a storage server.

In this implementation, the storage system is applicable to a centralized distribution scenario, and the storage system is the centralized storage device or the storage server.

In a possible implementation of the first aspect, the storage system is a distributed storage system, or a distributed storage device included in the distributed storage system.

In this implementation, the storage system is applicable to a distributed distribution scenario, and the storage system is the distributed storage system, or the distributed storage device included in the distributed storage system.

According to a second aspect, this application provides a data storage apparatus. For beneficial effects, refer to the descriptions of the first aspect. Details are not described herein again. The apparatus has a function of implementing the behavior in the method instance in the first aspect. The function may be implemented by hardware, or may be implemented by executing corresponding software by hardware. The hardware or the software includes one or more modules corresponding to the function. In a possible design, the apparatus includes:
a first storage module, configured to: store a data received by the data storage apparatus, by choosing a manner of a small parity group, when a load of the data storage apparatus is low, where the small parity group includes a data block and a parity block; and
a second storage module, configured to: store a data received by the data storage apparatus, by choosing a manner of a large parity group, when a load of the data storage apparatus is high, where the large parity group includes a data block and a parity block, and a quantity of data blocks in the large parity group is greater than a quantity of data blocks in the small parity group.

In a possible implementation of the second aspect, the data storage apparatus stores the data in a redirection on write ROW manner.

In a possible implementation of the second aspect, that the data received by the data storage apparatus is stored includes:

The data storage apparatus sends data in the small parity group and data in the large parity group to a local storage or a remote storage for storage, where different storages store different blocks.

In a possible implementation of the second aspect,
when garbage collection is performed on the storage, the data storage apparatus migrates valid data in the storage based on the large parity group.

In a possible implementation of the second aspect, a quantity of parity blocks in the large parity group is the same as a quantity of parity blocks in the small parity group.

In a possible implementation of the second aspect, the data storage apparatus is a centralized storage device or a storage server.

In a possible implementation of the second aspect, the data storage apparatus is a distributed storage system, or a distributed storage device included in the distributed storage system.

According to a third aspect, this application provides a controller, including a memory and a processor. The memory stores data and a program that can run on the processor, and when the processor executes the program, the controller implements the method in any one of the first aspect or the possible implementations of the first aspect.

According to a fourth aspect, this application provides a storage system, including a plurality of storage devices. When a load of the storage system is low, received data is chosen to be stored in the storage devices of the storage system in a manner of a small parity group, where the small parity group includes a data block and a parity block.

When a load of the storage system is high, received data is chosen to be stored in the storage devices of the storage system in a manner of a large parity group, where the small parity group includes a data block and a parity block, and a quantity of data blocks in the large parity group is greater than a quantity of data blocks in the small parity group.

According to a fifth aspect, this application provides a storage system. Each storage device manages a plurality of storages. The storage system is configured to:
store blocks in a same parity group in a plurality of storage devices, where different storage devices store different blocks; or
store the blocks in the same parity group in the plurality of storages, where different storages store different blocks.

According to a sixth aspect, this application provides a computer program product. When the computer product is executed by a computer, the method in any one of the first aspect or the possible implementations of the first aspect is implemented.

According to a seventh aspect, this application provides a chip system. The chip system includes a processor, configured to implement the method in any one of the first aspect or the possible implementations of the first aspect. In a possible design, the chip system further includes a storage, configured to store program instructions and/or data. The chip system may include a chip, or may include a chip and another discrete device.

The solutions in the second aspect to the seventh aspect are used to implement or cooperate implementation of the method in any one of the first aspect or the possible implementations of the first aspect, and therefore, can achieve beneficial effects the same as or corresponding to the first aspect. Details are not described herein again.

### BRIEF DESCRIPTION OF DRAWINGS

FIG. 1a is a diagram of a structure of a storage system according to an embodiment of this application;
FIG. 1b is a diagram of an example of a structure of a controller in a storage system according to an embodiment of this application;
FIG. 1c is a schematic flowchart of a data storage method according to an embodiment of this application;
FIG. 2 is a diagram of a structure of a RAID 5 disk array according to an embodiment of this application;
FIG. 3 is a schematic flowchart of a currently used data storage method;
FIG. 4a is another schematic flowchart of a data storage method according to an embodiment of this application;
FIG. 4b is a schematic flowchart of storing received data in a manner of a small parity group according to an embodiment of this application;
FIG. 4c is a schematic flowchart of performing garbage collection on a solid-state drive according to an embodiment of this application;
FIG. 5 is a diagram of a structure of a data storage apparatus according to an embodiment of this application; and
FIG. 6 is a diagram of a structure of a controller according to an embodiment of this application.

### DESCRIPTION OF EMBODIMENTS

The following clearly describes the technical solutions in embodiments of this application with reference to the accompanying drawings in embodiments of this application. Apparently, the described embodiments are merely some rather than all of embodiments of this application. All other embodiments obtained by a person skilled in the art based on embodiments of this application without creative efforts shall fall within the protection scope of this application. A person skilled in the art may learn that, with development of technologies and emergence of a new scenario, technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that data termed in such a way are interchangeable in appropriate circumstances, so that embodiments described herein can be implemented in other sequences than the sequence illustrated or described herein. In addition, the terms "include" and "have" and any other variants are intended to cover non-exclusive inclusion. For example, a process, method, system, product, or device that includes a series of steps or modules is not necessarily limited to those expressly listed steps or modules, but may include other steps or modules not expressly listed or inherent to the process, method, product, or device.

The term "and/or" in this application describes only an association relationship between associated objects, and indicates that three relationships may exist. For example, A and/or B may indicate the following three cases: Only A exists, both A and B exist, and only B exists. In addition, the character "/" in this application generally indicates an "or" relationship between the associated objects.

It should also be noted that in some alternative implementations, the specified functions/actions may not appear in sequences of the accompanying drawings. For example, actually, two accompanying drawings shown in succession may essentially occur simultaneously or may sometimes be performed in a reverse sequence, depending on the related functions/actions.

In embodiments of this application, unless otherwise specified, "at least one" means one or more, and "a plurality of" means two or more. It may be understood that, in this application, "when", "if", and "on condition that" all mean that an apparatus performs corresponding processing in an objective case, are not intended to limit time, do not mean that the apparatus is required to have a determining action during implementation, and do not mean any other limitation. In addition, the specific term "example" means "used as an example, embodiment, or illustration". Any embodiment described as an "example" is not necessarily explained as being superior or better than other embodiments.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

First, to better understand the solutions in embodiments of this application, the following first describes an application scenario of embodiments of this application. A data storage method provided in embodiments of this application is mainly applied to a storage system, and is used for continuing service availability.

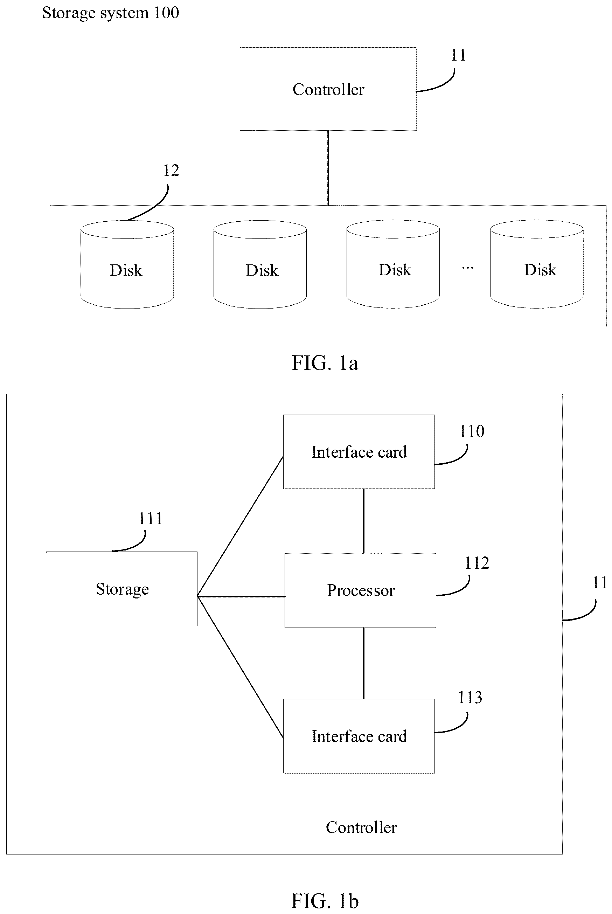

With reference to FIG. 1a and FIG. 1b, the following describes an example of an application scenario of the data storage method provided in embodiments of this application. FIG. 1a is a diagram of a structure of a storage system according to an embodiment of this application. The storage system 100 includes several disks 12 and a controller 11.

The storage system 100 is applicable to a storage system that uses a redirection on write (ROW) mechanism, and includes a centralized storage system, a distributed storage system, and the like. Optionally, the storage system may be a centralized storage device or a storage server. Optionally, the storage system 100 may alternatively be a distributed storage system, or a distributed storage device included in the distributed storage system.

The controller 11 is connected to a host (not shown in the figure). The controller and the host may be integrated into a same central processing unit (CPU). The controller 11 may be a computing device, for example, a server or a desktop computer. A writing system and an application program are installed on the controller 11. The controller 11 may receive an input/output (I/O) request from the host. The controller 11 may further store data carried in the I/O request, and write the data to the disks 12. The controller 11 and the disks 12 may be connected locally or remotely, and a connection manner includes a wired connection, a wireless connection, and the like. When the disks 12 and the controller 11 are connected locally, the disks 12 and the controller 11 are located in a same device (for example, a same physical storage device or a same physical storage server), and the controller 11 and the disks 12 are connected through a peripheral component interconnect express (peripheral component interconnect express, PCIe) bus, or are connected through a serial advanced technology attachment (SATA) interface, a serial attached small computer system interface (SAS), or an M.2 interface. When the disks 12 and the controller 11 are connected remotely, the disks 12 and the controller 11 are not in a same device. For example, the controller 11 and the external disks 12 are connected through a built-in network adapter. The disk 12 herein refers to a persistent storage that can maintain data for long time after a power failure, for example, a hard disk drive (HDD), a solid-state drive (SSD), or a phase change memory (PCM). For the controller 11, a storage function of the controller 11 is executed when the data is sent to the disks 12.

It should be noted that FIG. 1a is merely an example for description, and the disk 12 is merely an example of a storage connected to the controller 11. Shapes of the controller 11 and the disks 12 shown in FIG. 1a do not represent actual physical structures of the controller 11 and the disks 12, and are not limited herein. In addition, a connection manner between the controller and the disks 12 is not limited in this embodiment of this application, and it only needs to be ensured that the controller 11 can communicate with the disks 12. In actual application, the storage system 100 may include two or more controllers. A physical structure and a function of each controller are similar to those of the controller 11. In addition, a connection manner between the controllers and a connection manner between any controller and the disks 12 are not limited in this embodiment, provided that the controllers can communicate with each other, and each controller can communicate with the disks 12. In addition, in this embodiment, the controller 11 usually sends instructions to a plurality of disks 12. For ease of description, a set including the plurality of disks 12 is referred to as a disk group.

FIG. 1b is a diagram of an example of a structure of a controller in a storage system according to an embodiment of this application. As shown in FIG. 1b, the controller 11 includes an interface card 110, a storage 111, a processor 112, and an interface card 113.

The interface card 110 is configured to communicate with a host, and receive an instruction sent by the host. The controller 11 may receive a write instruction of the host through the interface card 110.

The processor 112 is a central processing unit. In this embodiment of this application, the processor 112 may be configured to receive the write instruction or a read instruction from the host and process the instruction. The processor 112 may further send data in the write instruction to disks 12.

Optionally, the controller 11 may further include the storage 111.

The storage 111 includes a volatile memory. For example, the volatile memory is a random-access memory (RAM).

Optionally, the controller 11 may further include the interface card 113.

The interface card 113 is configured to communicate with the disks 12. The controller 11 may send a write data instruction to the disks 12 for storage through the interface card 113.

It may be understood that the structures of the storage systems shown in FIG. 1a and FIG. 1b are merely examples. The data storage method provided in embodiments of this application may be applied to, but is not limited to, the structures described above. This is not limited herein.

Embodiments of this application provide a storage system. The storage system includes a controller and a plurality of disks. The controller may communicate with the plurality of disks through an internal connection path, to transfer a control signal and/or a data signal. The controller stores strip data information. The strip data information is used for recording a status of each strip unit in a disk group. The controller may execute a received data processing instruction based on the stored strip data information.

It may be understood that, this application is applicable to any storage system that uses a ROW mechanism. To simplify descriptions, in this application, a redundant array of independent disks (RAID) indicates that a plurality of independent physical disks are combined in different manners to form a disk group. Meanings of the RAID are the same as those of a RAID group and a RAID array that are generally mentioned, and are not limited herein.

Based on the storage system shown in FIG. 1a, when the storage system only supports a large stripe (stripe), when data received by the storage system in short time is insufficient to fully fill all stripes of a disk, zero padding needs to be performed on all unwritten parts in the disk, resulting in extra overheads and an increase in write amplification.

A stripe is a type of a parity group. Each stripe includes a plurality of stripe units (stripe units), and one stripe includes both a data stripe unit and a parity stripe unit. The large stripe is a stripe with a large quantity of stripe units, and a small stripe is a stripe with a small quantity of stripe units.

When storing data in a persistent storage medium (for example, an SSD or an HDD), the storage system uses a complete stripe (also referred to as a "full stripe") as a minimum unit. For example, when a stripe granularity is 20+2, 20 data stripe units need to be assembled, and then two parity stripe units corresponding to the 20 data stripe units are calculated, to form a "full stripe".

It is assumed that an amount of I/O data currently received by the storage system is small, and only eight data stripe units can be generated. In this case, the storage system has two solutions: (1) The storage system continues to wait for new data until the 20 data stripe units are assembled. (2) The storage system uses "0s" to fully fill the remaining 12 data stripe units, to assemble the 20 data stripe units as soon as possible. In the first solution, during waiting, the eight data stripe units are temporarily stored in a memory and cannot be delivered to the disks. In the second solution, although the eight data stripe units can be delivered to the disks as soon as possible, the 12 data units that are all padded with 0 are also sent to the disks for storage, resulting in a waste of disk storage space.

If a stripe size is 8+2 instead of 20+2, a "full stripe" can be formed through assembling based on an I/O of a user in short time. Data can be delivered to the disks as soon as possible without being padded with "0s". Therefore, when the storage system uses the large stripe, utilization of the storage medium is higher. However, when the storage system receives a small amount of data in short time, the data cannot be delivered to the disks as soon as possible or disk utilization is low.

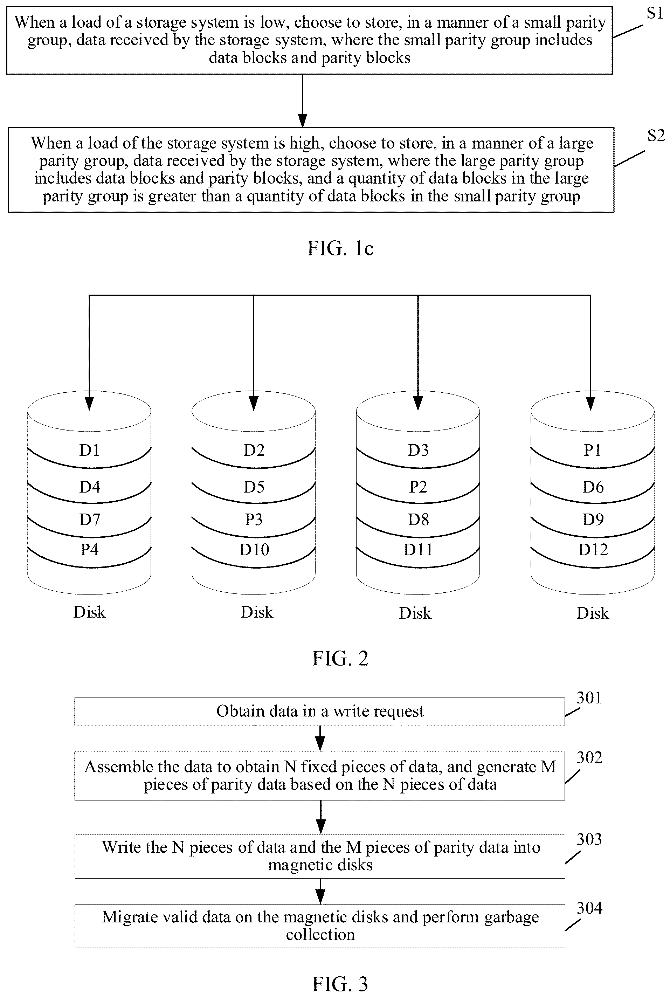

To resolve the foregoing problem, embodiments of this application provide a data storage method. The method is applied to the controller 11 shown in FIG. 1a. Specifically, FIG. 1c is a schematic flowchart of a data storage method according to an embodiment of this application. The method specifically includes the following steps. S1: When a load of a storage system is low, store, by choosing a manner of a small parity group, data received by the storage system, where the small parity group includes a data block and a parity block. S2: When a load of the storage system is high, store, by choosing a manner of a large parity group, data received by the storage system, where the large parity group includes a data block and a parity block, and a quantity of data blocks in the large parity group is greater than a quantity of data blocks in the small parity group. The parity group herein is a RAID group, an erasure code (EC) group, or a similar technology. When data of some blocks in a same parity group is damaged, provided that a quantity of damaged blocks does not exceed a parity upper limit (where the upper limit is usually an amount of data of the parity block), the damaged blocks may be recovered by using remaining blocks.

In this embodiment of this application, the "load" is used to describe an amount of data received by the storage system (or a storage apparatus or a storage device) in short time. When a large amount of data is received in short time (where the large amount of data may be from one I/O request, or may be from a plurality of I/O requests, and this is not limited), it means that a large parity group may be formed through assembling in short time, and in this case, an executor of the data storage method is having a high load. Otherwise, when a small amount of data is received in short time, it means that it is difficult to form a large parity group through assembling in short time, and in this case, the executor of the data storage method is having a low load. A specific high/low load may be set by a user based on experience or determined through AI training. For example, receiving more than 100 MB of data within 10 seconds is defined as a high load. Receiving less than 100 MB of data within 10 seconds is defined as a low load. Alternatively, CPU utilization of a storage device that processes an I/O reaching 50% is defined as a high load; otherwise, defined as a low load.

It may be understood that, currently, N and M in N+M of the disk group are fixed, for example, 23 (a quantity of data blocks)+2 (a quantity of parity blocks) commonly seen. These data blocks are respectively stored in 25 disks. If any two disks are faulty, the other 23 disks may be used for data recovery. However, if an actual quantity of data blocks is less than 23 in short time, 0s need to be padded to fully fill 23 data columns, and two parity blocks of the 23 data blocks are generated to form a complete parity group. After the parity group is formed, data in the parity group may be sent to the disks (written into the disks) for storage. These 0s are also stored from a cache to the disks, and occupy disk space, resulting in a waste of the disk space.

Correspondingly, in this application, when the load of the storage system is low, and the data received by the storage system in insufficient to fully fill a stripe, a quantity of columns of a logical block group to be written into the disks may be dynamically adjusted based on a size of the received data. Different values of N are supported, and different redundancy ratios are adaptively selected. For example, 4+2, 10+2, and 23+3 are all supported. When the load of the storage system is low, the received data is stored in the manner of the small parity group, for example, 4+2, without worrying about inability to assemble the 23 data blocks. When the load of the storage system is high, the received data is stored in the manner of the large parity group. This avoids extra overheads caused by performing zero padding when the data is insufficient to fully fill a stripe, reduces write amplification, and improves overall performance and a service life of the disk.

Optionally, after the data is written into the disks, when garbage collection is performed on the solid-state drives, the storage system may migrate valid data in the solid-state drives based on the large parity group to recover the disk group to a maximum capacity. For example, 23 data blocks are assembled, and 23+2 is directly used, to recover capacity utilization of the disk group, and reduce cases of zero padding. In addition, data written into the disks includes a higher proportion of real data from the user, and less data is written into the disks, in other words, write amplification is reduced.

The foregoing describes a scenario to which the data storage method provided in embodiments of this application is applied. The following describes in detail an implementation process of the data storage method provided in embodiments of this application.

First, to better understand solutions in embodiments of this application, the following first describes related terms and concepts that may be used in embodiments of this application.

### (1) Redundant array of independent disks

A technology of a redundant array of independent disks is to combine a plurality of independent physical disks in different manners to form a disk group, to provide higher storage performance than that of a single disk and provide data backup. Based on different data organization manners, common RAIDs include a RAID 0, a RAID 1, a RAID 5, a RAID 6, a RAID 10, and the like. Performance and reliability of various levels may be provided based on different RAID levels. It may be ensured that, in most cases, when one or more disks are faulty, data on the faulty disks can be recovered based on data on the remaining member disks by using an algorithm corresponding to the RAID level, to ensure that the data is not lost.

An N+M mode needs to be configured in configuration policies of the RAID 5 or higher. N and M are both positive integers greater than 1. N represents a quantity of data disks, and M represents a quantity of parity disks. Optionally, a hot spare disk is further configured in the RAID. When a disk in the RAID is faulty, a RAID controller may recover data on the faulty disk to the hot spare disk based on parity data on a parity disk and data on a data disk, to improve system reliability.

In embodiments of this application, the RAID 5 is used as an example for description. It should be understood that, during actual application, the RAID corresponds to a plurality of levels of N+M. This is not limited in this application.

The RAID 5 uses a parity bit of data to ensure data security. The RAID 5 may store the parity bit of the data on a specific single disk or store parity bits of data segments on various disks alternately. FIG. 2 shows a data storage structure of a RAID 5 disk array. FIG. 2 is a diagram of a structure of a RAID 5 disk array according to an embodiment of this application. FIG. 2 shows a RAID 5 disk array including four disks. Each cylinder represents one disk, P (parity) represents a parity bit, and D (data) represents a data segment. A calculation manner of the parity data is exclusive OR (xor). In the example shown in FIG. 2, an exclusive OR result of every three data segments is used as a parity bit of the three data segments. For example, a parity bit P1 is an exclusive OR result of data segments D1, D2, and D3, that is, P1=D1⊕D2⊕D3. In this way, if any disk is damaged, damaged data may be reconstructed based on parity bits and data segments on the remaining disks.

According to a technical principle of the RAID 5, when one disk in the disk array is faulty, data on the faulty disk may be recovered through reconstruction. However, when two disks are faulty, the RAID 5 disk array is invalid. In this case, no read/write operation can be performed on the remaining normal disks in the RAID 5 disk array, especially data cannot continue to be written. This may cause a severe data loss incident. Even if the data on the RAID 5 disk is recovered subsequently, the data is lost because service data generated during a RAID 5 fault time period is not written into the RAID in time.

It should be noted that N+1 configuration of the RAID 5 logically means that N data disks and one parity disk are included. However, whether the parity data is fixed on one parity disk or the parity data is rotated among a plurality of disks may be set based on an actual requirement. This is also not limited in this application.

### (2) Garbage collection

Garbage collection (GC) is to migrate valid data in a logical block group to a new logical block group, and then the valid data and invalid data in the logical block group are erased, to form a new free logical block group for storing other new data.

The foregoing describes the terms provided in embodiments of this application. To better understand the technical solutions provided in embodiments of this application, a currently used data storage method is described.

FIG. 3 is a schematic flowchart of a currently used data storage method. As shown in FIG. 3, the method mainly includes the following step 301 to step 304.

Step 301: Obtain data in a write request.

In this step, a host delivers the data to a cache (cache), and then the cache writes the data into a RAID. Garbage may be generated due to overwriting.

Step 302: Assemble the data to obtain N fixed pieces of data, and generate M pieces of parity data based on the N pieces of data.

Step 303: Write the N pieces of data and the M pieces of parity data into disks.

Step 304: Migrate valid data on the disks and perform garbage collection.

There are the following problems in the currently used data storage method.
(1) When a load of a system is low, a small quantity of write requests are received. In this case, if the data is insufficient to fully fill a stripe and fully fill N columns, a zero write operation needs to be performed on a logical block into which no data is written, resulting in extra overheads. In addition, writing zeros increases redundant write operations on the disk, wastes a service life of the disk, increases write amplification, and affects overall performance and a service life of a storage system.
(2) When a load of the system is low, if a large quantity of zeros are written, an amount of garbage data is large. If garbage collection is performed immediately, it is equivalent to writing for a plurality of times, resulting in a waste of the service life of the disk and an increase in system overheads.

To resolve the foregoing problems, this application provides a data storage method. For ease of understanding, the following describes in detail the data storage method provided in embodiments of this application with reference to the accompanying drawings and an application scenario. A person of ordinary skill in the art may learn that, with development of technologies and emergence of a new scenario, the technical solutions provided in embodiments of this application are also applicable to a similar technical problem.

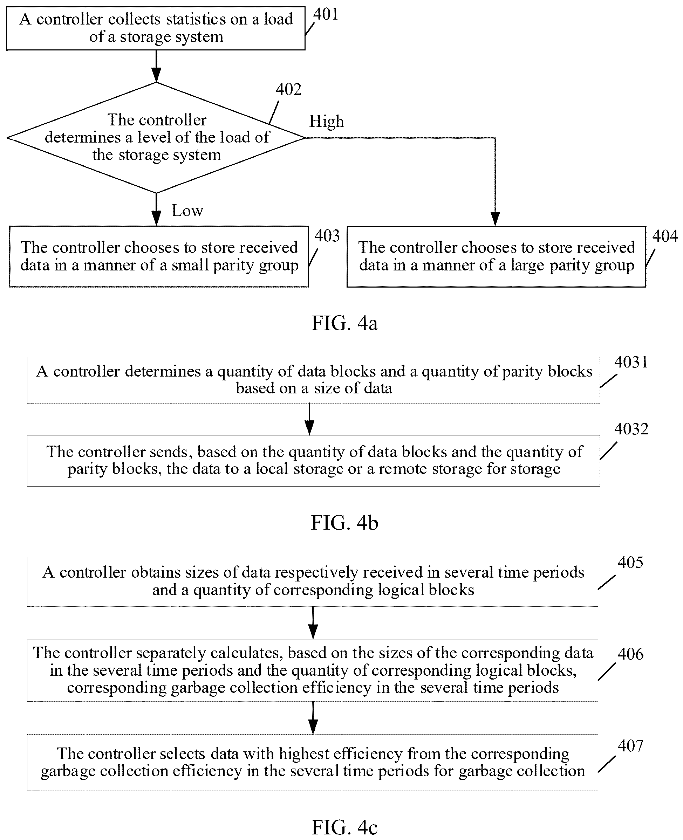

FIG. 4a is another schematic flowchart of a data storage method according to an embodiment of this application. The data processing method may be performed by the storage system shown in FIG. 1a, and specifically, performed by a controller inside the storage system. As shown in FIG. 4a, the controller may perform the following step 401 to step 404, to avoid extra overheads caused by performing zero padding when data is insufficient to fully fill a stripe, reduce write amplification, and improve overall performance and a service life of a disk.

Step 401: The controller collects statistics on a load of the storage system.

In this embodiment of this application, the controller receives, in a specific time period, an instruction of a write request delivered by a user, and collects statistics on a size of data in the received write request.

Step 402: The controller determines a level the load of the storage system. If the load is low, the controller performs step 403. If the load is high, the controller performs step 404.

In this embodiment of this application, the controller adaptively selects, by determining the level of the load of the storage system, a corresponding manner to store the received data. The level of the load mainly means whether data received by the storage system in a short time period is sufficient to fully fill a large stripe (stripe). If the load is low, the data is insufficient to fully fill the large stripe in short time, and the controller chooses to store the received data in a manner of a small parity group. If the load is high, the data is sufficient to fully fill the stripe in short time, and the controller chooses to store the received data in a manner of a large parity group, to avoid a zero padding operation.

Optionally, the controller may alternatively determine the level of the load based on a quantity of data blocks and a quantity of parity blocks that are correspondingly generated based on the received data.

Specifically, after receiving the data, the controller calculates the quantity of data blocks and the quantity of parity blocks based on a size of the data. If the controller determines that the quantity of data blocks and the quantity of parity blocks are less than a total quantity of data columns of disks or a quantity of disks in the storage system, it indicates that the received data is insufficient to fully fill a stripe, and the controller may determine that the load of the storage system is low. If the controller determines that the quantity of data blocks and the quantity of parity blocks that correspond to the received data are sufficient to fully fill the stripe, the controller may determine that the load of the storage system is high.

It may be understood that, in actual application, the level of the load of the storage system may alternatively be set based on an actual requirement, and it may be specified whether the data is sufficient to fully fill a stripe in a short time period. Alternatively, the level of the load may be determined based on a set threshold or another method. This is not limited herein.

Step 403: The controller chooses to store the received data in the manner of the small parity group.

In this embodiment of this application, when the load of the storage system is low, the controller in the storage system chooses to store, in the manner of the small parity group, the data received by the storage system, to dynamically adjust a quantity of logical blocks in the disk based on the received data, and avoid an invalid zero write operation. The logical block includes a data block and a parity block.

In an optional implementation, FIG. 4b is a schematic flowchart of storing received data in a manner of a small parity group according to an embodiment of this application. The step in which the controller chooses to store the received data in the manner of the small parity group may include the following step 4031 and step 4032.

Step 4031: The controller determines the quantity of data blocks and the quantity of parity blocks based on the size of the data.

In this embodiment of this application, after receiving the size of the data, the controller may generate a quantity n of data blocks based on the size of the data, assemble the data to obtain n data blocks, generate m pieces of parity data, and write the data into disks, to avoid write amplification.

Optionally, the controller may perform weighted calculation on sizes of all received data, and then determine the quantity of data blocks and the quantity of parity blocks based on a size of the data obtained through weighted calculation.

Optionally, that the controller determines the quantity of data blocks and the quantity of parity blocks based on the size of the data includes:
The controller obtains a size of a single logical block in a logical block group, where the logical block includes a data block and a logical block;
the controller determines, based on the size of the data and the size of the single logical block, a quantity of data blocks that are to be written into the disks; and
the controller obtains the quantity of parity blocks based on the quantity of data blocks.

In this implementation, after performing weighted calculation on the sizes of all the received data, the controller may determine, based on the size of the data obtained through weighted calculation and the size of the single logical block in the logical block group, the quantity of data blocks that are to be written into the disks. The logical block includes a data block and a parity block. After obtaining the quantity of data blocks on the disks, the controller may calculate the quantity of corresponding parity blocks on the disks based on an exclusive OR relationship between the data blocks.

It may be understood that, based on different loads, the size of the data received by the controller in a specific time period also constantly changes. For ease of calculation, the controller may perform historical weighted calculation on the sizes of the received data, to obtain an average value of the sizes of the data.

Optionally, the controller obtains, based on a quotient of the size of the data and the size of the single logical block, the quantity of data blocks that are to be written into the disks.

Step 4032: The controller sends, based on the quantity of data blocks and the quantity of parity blocks, the data to a local storage or a remote storage for storage.

In this embodiment of this application, different storages store different blocks, and the storage may be, for example, an SSD. The controller may determine, based on the size of the data, the quantity n of data blocks and the quantity m of parity blocks that are written into storages, and write the data into the solid-state drives.

Step 404: The controller chooses to store the received data in the manner of the large parity group.

In this embodiment of this application, when determining that the load is high, the controller may adaptively choose to store, in the manner of the large parity group, the data received by the storage system. A quantity of data blocks in the large parity group is greater than the quantity of data blocks in the small parity group.

It may be understood that, generally, during application, the quantity of data blocks and a quantity of parity blocks in the large parity group are a quantity of strips included in a full stripe. When the load of the storage system is high, a large amount of data may be received in short time and written into the full stripe. In this case, the controller does not need to consider extra overheads caused by performing zero padding when the data is insufficient to fully fill the stripe.

Based on step 401 to step 404, in an optional implementation, when garbage collection is performed on the solid-state drives, the controller in the storage system migrates, based on the large parity group, valid data stored in the storage by using the small parity group.

In this implementation, the solid-state drive is used as an example. FIG. 4c is a schematic flowchart of performing garbage collection on a solid-state drive according to an embodiment of this application. As shown in FIG. 4c, the controller performs the following step 405 to step 407.

Step 405: The controller obtains sizes of data respectively received in several time periods and a quantity of corresponding logical blocks.

In this embodiment of this application, when the load of the storage system is low, the controller may collect statistics on the data respectively received in the several time periods, and collect statistics on the quantity of logical blocks corresponding to data written into the solid-state drive, to perform comparison during subsequent garbage collection. The logical block includes a data block and a parity block.

Step 406: The controller separately calculates, based on the sizes of the corresponding data in the several time periods and the quantity of corresponding logical blocks, corresponding garbage collection efficiency in the several time periods.

In this embodiment of this application, when the load of the storage system is low, the controller collects the sizes of the data in the several time periods, and compares the garbage collection efficiency corresponding to the data received in the time periods, to select data with highest garbage collection efficiency for collection. The controller migrates valid data on the solid-state drive based on the large parity group, to recover capacity utilization.

It may be understood that, during actual application, the controller may collect write requests in several different time periods, and compare the write requests. It is not required that duration of the time periods is the same. The duration may be specifically set based on an actual requirement, and is not limited herein.

In an optional implementation, for each time period, that the controller calculates, based on a size of corresponding data in the time period and a quantity of corresponding logical blocks, garbage collection efficiency corresponding to the time period includes:
The controller obtains a size of a single logical block in a logical block group;
the controller obtains, based on the size of the single logical block and a quantity of columns of the logical block group, a total size corresponding to the logical block group;
the controller obtains a size of valid data in the logical block group; and
the controller obtains the garbage collection efficiency based on the total size corresponding to the logical block group and the size of the valid data.

In this implementation, after determining the quantity of columns of the corresponding logical block group based on the size of the data, the controller may obtain, based on the size of the single logical block and the quantity of columns of the logical block group, the total size corresponding to the logical block group. Then, the controller may obtain the garbage collection efficiency based on the total size corresponding to the logical block group and the size of the valid data in the logical block group.

For example, it is assumed that an amount of garbage data is 50%. In a 4D+2P disk group, a benefit is 6D, and valid data that needs to be migrated is 4D*50%. In this case, collection efficiency is 6D/(4D*50%)=3. In an 8+2P disk group, a benefit is 10D, and valid data that needs to be migrated is 8D*50%. In this case, collection efficiency is 10D/(8D*50%)=2.5.

Step 407: The controller selects the data with highest efficiency from the corresponding garbage collection efficiency in the several time periods for garbage collection.

In this embodiment of this application, after calculating the corresponding garbage collection efficiency in the several time periods, the controller selects the data with highest garbage collection efficiency from the corresponding garbage collection efficiency in the several time periods for garbage collection, to ensure a maximum collection benefit.

It may be understood that, currently, N and M in N+M of the disk group are fixed, for example, common 23 (a quantity of data blocks)+2 (a quantity of parity blocks). These data blocks are respectively stored in 25 disks. If any two disks are faulty, the other 23 disks may be used for data recovery. However, if an actual quantity of data blocks is less than 23 in short time, 0s need to be padded to fully fill 23 data columns, and two parity blocks of the 23 data blocks are generated to form a complete parity group. After the parity group is formed, data in the parity group may be sent to the disks (written into the disks) for storage. These 0s are also stored from a cache to the disks, and occupy disk space, resulting in a waste of the disk space.

Correspondingly, in this application, when an amount of data in a received write request is small, and the data in the write request is insufficient to fully fill a stripe, a quantity of columns of a logical block group to be written into the disks may be dynamically adjusted based on a size of the data in the received write request. Different values of N are supported, and different redundancy ratios are adaptively selected. For example, 4+2, 10+2, and 23+3 are all supported. When the load of the storage system is low, the received data is stored in the manner of the small parity group, for example, 4+2, without worrying about inability to assemble the 23 data blocks. When the load of the storage system is high, the received data is stored in the manner of the large parity group. This avoids extra overheads caused by performing zero padding when the data is insufficient to fully fill a stripe, reduces write amplification, and improves overall performance and a service life of the disk. After the data is written into the disks, because a large amount of data needs to be migrated during garbage collection, the valid data on the solid-state drive may be migrated based on the large parity group to recover the disk group to a maximum capacity. For example, 23 data blocks are assembled, and 23+2 is directly used, to recover capacity utilization of the disk group, and reduce cases of zero padding. In addition, data written into the disks includes a higher proportion of real data from the user, and less data is written into the disks, so that write amplification is reduced.

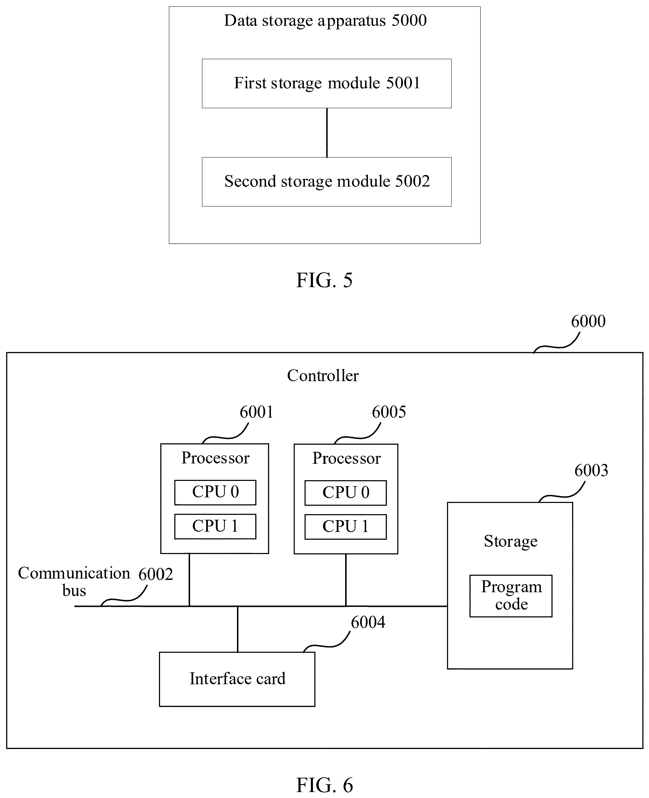

Based on the embodiments corresponding to FIG. 1a to FIG. 4c, to better implement the foregoing solutions in embodiments of this application, the following further provides a related device configured to implement the foregoing solutions. FIG. 5 is a diagram of a structure of a data storage apparatus according to an embodiment of this application. The data storage apparatus may be located in the controller shown in FIG. 1a. The data storage apparatus 5000 includes:
a first storage module 5001, configured to: when a load of the data storage apparatus is low, choose to store, in a manner of a small parity group, data received by the data storage apparatus, where the small parity group includes a data block and a parity block; and
a second storage module 5002, configured to: when a load of the data storage apparatus is high, choose to store, in a manner of a large parity group, data received by the data storage apparatus, where the large parity group includes a data block and a parity block, and a quantity of data blocks in the large parity group is greater than a quantity of data blocks in the small parity group.

In a possible implementation, the data storage apparatus stores the data in a redirection on write ROW manner.

In a possible implementation, that the data received by the data storage apparatus is stored includes:

The data storage apparatus sends data in the small parity group and data in the large parity group to a local storage or a remote storage for storage, where different storages store different blocks.

In a possible implementation,
when garbage collection is performed on the storage, the data storage apparatus migrates valid data in the storage based on the large parity group.

In a possible implementation, a quantity of parity blocks in the large parity group is the same as a quantity of parity blocks in the small parity group.

In a possible implementation, the data storage apparatus is a centralized storage device or a storage server.

In a possible implementation, the data storage apparatus is a distributed storage system, or a distributed storage device included in the distributed storage system.

In this embodiment, operations performed by the units in the data storage apparatus 5000 are similar to those described in the method embodiment shown in FIG. 4a, may be used for implementing functions of the controller in the foregoing method embodiment, and can also implement beneficial effects of the foregoing method embodiment. Details are not described herein again.

FIG. 6 is a diagram of a structure of a controller according to an embodiment of this application. As shown in FIG. 6, the controller 6000 is implemented by using a general bus architecture.

The controller 6000 includes at least one processor 6001, a communication bus 6002, a storage 6003, and at least one communication interface 6004.

The processor 6001, the storage 6003, and the communication interface 6004 communicate with each other through the communication bus 6002, or may implement communication by using another means such as wireless transmission. The storage 6003 is configured to store instructions. The processor 6001 is configured to execute the instructions stored in the storage 6003. The storage 6003 stores program code, and the processor 6001 may invoke the program code stored in the storage 6003 to perform step 401 to step 404 in the embodiment shown in FIG. 4a. For specific implementation, refer to detailed descriptions of step 401 to step 404 in the embodiment shown in FIG. 4a. Details are not described herein again.

Optionally, the processor 6001 is a general-purpose central processing unit (CPU), or may be another general-purpose processor, a digital signal processor (DSP), an application-specific integrated circuit (ASIC), a field-programmable gate array (FPGA) or another programmable logic device (PLD), a transistor logic device, a hardware component, or any combination thereof. The PLD is a complex programmable logic device (CPLD), a field-programmable gate array (FPGA), generic array logic (GAL), or any combination thereof.

The communication bus 6002 is configured to transmit information between the processor 6001, the storage 6003, and the communication interface 6004. The communication bus 6002 is classified into an address bus, a data bus, a control bus, and the like. For ease of representation, only one thick line is used to represent the bus in the figure, but this does not mean that there is only one bus or only one type of bus.

Optionally, the storage 6003 is a read-only memory (ROM) or another type of static storage device that can store static information and instructions. Alternatively, the storage 6003 is a random access memory (RAM) or another type of dynamic storage device that can store information and instructions. Alternatively, the storage 6003 is an electrically erasable programmable read-only memory (EEPROM), a compact disc read-only memory (CD-ROM) or another optical disc storage, an optical disc storage (including a compact disc, a laser disc, an optical disc, a digital versatile disc, a Blue-ray disc, and the like), a disk storage medium or another magnetic storage device, or any other medium that can be used to carry or store expected program code in the form of an instruction or a data structure and that can be accessed by a computer, but is not limited thereto. Optionally, the storage 6003 exists independently, and is connected to the processor 6001 through the communication bus 6002. Optionally, the storage 6003 is integrated with the processor 6001.

The communication interface 6004 is any apparatus such as a transceiver, and is configured to communicate with another device or a communication network. The communication interface 6004 includes a wired communication interface. Optionally, the communication interface 6004 further includes a wireless communication interface. The wired communication interface is, for example, an ethernet interface. The ethernet interface is an optical interface, an electrical interface, or a combination thereof. The wireless communication interface is a wireless local area network (WLAN) interface, a cellular network communication interface, a combination thereof, or the like.

In a specific implementation, as an embodiment, the processor 6001 includes one or more CPUs, for example, a CPU 0 and a CPU 1 shown in FIG. 6.

In a specific implementation, as an embodiment, the controller 6000 include a plurality of processors, for example, the processor 6001 and a processor 6005 shown in FIG. 6. Each of the processors is a single-core processor (single-CPU) or a multi-core processor (multi-CPU). The processor herein is one or more devices, circuits, and/or processing cores configured to process data (for example, computer program instructions).

In some embodiments, the storage 6003 is configured to store program code for executing the solutions in this application, and the processor 6001 executes the program code stored in the storage 6003. In other words, the data storage apparatus 5000 implements the foregoing embodiment of the data storage method by using the processor 6001 and the program code in the storage 6003.

It may be understood that method steps in embodiments of this application may be implemented in hardware, or may be implemented in software instructions that may be executed by the processor 6001. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. In addition, a scope of the apparatus described in this application is not limited thereto, and a structure of the apparatus may not be limited to FIG. 6. The apparatus may be an independent device, or may be a part of a larger device. For example, the apparatus may be:
(1) an independent integrated circuit IC, a chip, or a chip system or subsystem;
(2) a set including one or more ICs, where optionally, the IC set may further include a storage component configured to store data and/or instructions;
(3) a module that can be embedded in another device;
(4) a receiver, a terminal, an intelligent terminal, a wireless device, a handheld device, a mobile unit, a vehicle-mounted device, an artificial intelligence device, a machine device, a home device, a medical device, an industrial device, or the like; and
(5) another item.

It may be clearly understood by a person skilled in the art that, for the purpose of convenient and brief description, for a specific working process of the foregoing apparatus, refer to a corresponding process in the foregoing method embodiments. Details are not described herein again.

An embodiment of this application further provides a storage medium. The storage medium stores a program. When the program is executed by a processor, the data storage method in the foregoing embodiments is implemented.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash disk, a removable hard disk drive, a read-only memory, a random access memory, a magnetic disk, or an optical disc.

Names or numbers of steps in this application do not mean that the steps in the method procedure need to be performed in a time/logical sequence indicated by the names or numbers. An execution sequence of the steps in the procedure that has been named or numbered can be changed based on a technical objective to be achieved, provided that same or similar technical effects can be achieved. Unit division in this application is logical division and may be other division during implementation in actual application. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected based on an actual requirement to achieve objectives of the solutions of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Numerals used in embodiments of this application are merely used for differentiation for ease of description, but do not limit the scope of embodiments of this application. The sequence numbers of the foregoing processes do not mean execution sequences, and the execution sequences of the processes should be determined based on functions and internal logic of the processes.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, and such modifications or replacements do not cause the essence of the corresponding technical solutions to depart from the scope of the technical solutions in embodiments of this application.

## Claims

1. A data storage method, comprising:
storing, by choosing a manner of a small parity group, data received by the storage system, when a load of a storage system is low, wherein the small parity group comprises a data block and a parity block; and
storing, by choosing a manner of a large parity group, data received by the storage system, when a load of the storage system is high, wherein the large parity group comprises a data block and a parity block, and a quantity of data blocks in the large parity group is greater than a quantity of data blocks in the small parity group.

2. The data storage method according to claim 1, wherein the storage system stores the data in a redirection on write ROW manner.

3. The data storage method according to claim 1 or 2, wherein storing the data received by the storage system comprises:
sending, by the storage system, data in the small parity group and data in the large parity group to a local storage or a remote storage for storage, wherein different storages store different blocks.

4. The data storage method according to claim 3, further comprising:
migrating, by the storage system based on the large parity group, valid data stored in the storage by using the small parity group, when garbage collection is performed on the storage.

5. The data storage method according to any one of claims 1 to 4, wherein a quantity of parity blocks in the large parity group is the same as a quantity of parity blocks in the small parity group.

6. The data storage method according to any one of claims 1 to 5, wherein the storage system is a centralized storage device or a storage server.

7. The data storage method according to any one of claims 1 to 5, wherein the storage system is a distributed storage system, or a distributed storage device comprised in the distributed storage system.

8. A data storage apparatus, comprising:
a first storage module, configured to: store a data received by the data storage apparatus, by choosing a manner of a small parity group, when a load of the data storage apparatus is low, wherein the small parity group comprises a data block and a parity block; and
a second storage module, configured to: store a data received by the data storage apparatus, by choosing a manner of a large parity group, when a load of the data storage apparatus is high, wherein the large parity group comprises a data block and a parity block, and a quantity of data blocks in the large parity group is greater than a quantity of data blocks in the small parity group.

9. The data storage apparatus according to claim 8, wherein the data storage apparatus stores the data in a redirection on write ROW manner.

10. The data storage apparatus according to claim 8 or 9, wherein storing the data received by the data storage apparatus comprises: send the data in the small parity group, by the data storage apparatus, to a local storage or a remote storage for storage, wherein different storages store different blocks.

11. The data storage apparatus according to claim 10, wherein
the data storage apparatus migrates, based on the large parity group, valid data stored in the storage by using the small parity group, when garbage collection is performed on the storage.

12. The data storage apparatus according to any one of claims 8 to 11, wherein a quantity of parity blocks in the large parity group is the same as a quantity of parity blocks in the small parity group.

13. The data storage apparatus according to any one of claims 8 to 12, wherein the data storage apparatus is a centralized storage device or a storage server.

14. The data storage apparatus according to any one of claims 8 to 12, wherein the data storage apparatus is a distributed storage system, or a distributed storage device comprised in the distributed storage system.

15. A controller, comprising a memory and a processor, wherein the memory stores the data and a program that can run on the processor, and when the processor executes the program, the controller implements the data storage method according to any one of claims 1 to 7.

16. A storage system, comprising a plurality of storage devices, wherein when a load of the storage system is low, received data is chosen to be stored in the storage devices of the storage system in a manner of a small parity group, wherein the small parity group comprises a data block and a parity block; and
when a load of the storage system is high, received data is chosen to be stored in the storage devices of the storage system in a manner of a large parity group, wherein the small parity group comprises a data block and a parity block, and a quantity of data blocks in the large parity group is greater than a quantity of data blocks in the small parity group.

17. The storage system according to claim 16, wherein each storage device manages a plurality of storages, and the storage system is configured to:
store blocks in a same parity group in the plurality of storage devices, wherein different storage devices store different blocks; or
store the blocks in the same parity group in the plurality of storages, wherein different storages store different blocks.
